# EUROPEAN PATENT APPLICATION

(11) **EP 4 783 328 A1**
(43) Date of publication of application: **29.07.2026**
(21) Application number: 24868001.9
(22) Date of filing: 20.08.2024
(51) Int. Cl.: H01M 50/284, H01M 10/48, H01M 50/204, H01M 50/209, H01M 50/249, H01M 50/342, H01M 50/505, H01M 50/569

(54) **BATTERY PACK**

(30) Priority: 20.09.2023 JP 2023151963; 20.09.2023 JP 2023151964
(71) Applicant: Kubota Corporation, Osaka-shi, Osaka 530-0011 (JP)
(72) Inventor: KISHI, Shinji, Sakai-shi, Osaka 592-8331 (JP); KIMURA, Ryota, Sakai-shi, Osaka 592-8331 (JP)
(74) Representative: Müller-Boré & Partner Patentanwälte PartG mbB
(86) International application number: PCT/JP2024/029484
(87) International publication number: WO 2025/062920

(57) **Abstract**

The present application has an object to provide a battery pack 40 which can flexibly respond to a specification change, and the battery pack 40 mounted on a hybrid system 10 includes a battery module 50 for supplying electricity to a motor generator 2 of the hybrid system 10, a control circuit for controlling the battery module 50, and a housing 400 accommodating the battery module 50 and the control circuit, in which the battery module 50 has a plurality of battery cells 510 and a cell case 500 accommodating the plurality of battery cells 510 and including a fixing part 500a with respect to the housing 400, the control circuit has a BMU 85 for monitoring and controlling an entire state of the battery module 50 and a CMU 87 for monitoring a state of each of the plurality of battery cells 510 and sending information to the BMU 85, in which the CMU 87 is mounted on the cell case 500 in one unit of the battery module 50.

## Description

### Technical Field

The present invention relates to a battery pack mounted on a hybrid system.

### Background Art

PTL 1 discloses a battery mounting structure used for electric automobiles and a hybrid-type vehicles. This battery mounting structure includes a case in which a plurality of battery modules for driving a vehicle are accommodated on a lower side of a floor panel of a vehicle interior. The plurality of battery modules are divided into a lower-stage module and an upper-stage module, and the case has a lower-part case member made of metal, an intermediate-part case member made of metal, and an upper-part case member for covering a predetermined region of an upper-surface part of the intermediate-part case member from above. The lower-stage module is fixed to a bottom part of the lower-part case member, and the intermediate-part case member is fixed to the lower-part case member so as to cover the lower-stage module from above, and the lower-part module is accommodated in a water-tight manner. The upper-stage module is fixed in a state of close contact with the upper surface part of the intermediate-part case member in the predetermined area, the upper-part case member is formed in a container shape having an opening part in a bottom part, and in a state where the predetermined area is covered, and a peripheral part of the opening part is in a state of close contact with the upper-surface part of the intermediate-part case member, the upper-stage module is accommodated in a water-tight manner. Then, the lower-part case member is mounted on the lower side of the floor panel, whereby the case is fixed to the vehicle.

PTL 2 discloses a battery pack device used for an electric automobile, for example, and constituted by batteries stacked in plural stages. This battery pack device includes a first battery group constituted by disposing a plurality of batteries on the same plane and a second battery group stacked on the first battery group with a battery tray between them and constituted by disposing a plurality of the same batteries as the batteries on the same plane in the battery tray, and includes a battery-pack main body including a battery part in which each battery is electrically connected to each other and a main body case accommodating the battery part. The battery has a cuboid shape and can be installed in a first attitude in which a height in a direction in which the second battery group is stacked on the first battery group is small and in a second attitude in which a position of a terminal is higher in the stacking direction than a position of a terminal of the battery in the first attitude. This battery-pack device is characterized in that, in the batteries of the first battery group, a first battery is disposed in the second attitude, a hole through which a terminal of the first battery protrudes to the second battery group side by passing of the vicinity of the terminal of the first battery is formed in the battery tray, in the batteries of the second battery group, the second battery in the vicinity of the hole is disposed in the first attitude, and the first battery and the second battery are electrically connected to each other by a connecting member whose shape is fixed.

In the housing of the battery pack, battery cells in the number required to acquire a desired voltage are accommodated. A state of each battery cell is monitored by a CMU (Cell Management Unit), and the state of the entire battery module including the plurality of battery cells is monitored by a BMU (Battery Management Unit). Thus, in designing of the battery pack, the number of battery cells required to acquire a desired specification voltage and a control circuit corresponding to a layout are required, which makes flexible response to a specification change difficult.

In addition, in the housing of the battery pack, battery cells in the number required for obtaining a desired voltage are accommodated. As this battery cell, a lithium-ion battery or a nickel-hydrogen battery is used. The battery cell is provided in a substantially cuboid shape, and a plurality of the battery cells are disposed in a limited space in the housing. Since the battery cell generates a heat by a chemical reaction of charging/discharging, it is important to efficiently release the heat emitted from the battery cell accommodated in the state of close contact in the housing to the outside.

### Citation List

### Patent Literature

PTL 1: Japanese Patent Application Publication No. 2020-001451
PTL 2: Japanese Patent Application Publication No. 2006-080042

### Summary of Invention

### Technical Problem

The present invention was made in view of the above-described circumstances and has an object to provide a battery pack which can flexibly respond to a specification change. In addition, it is an object to provide a battery pack which can efficiently release a heat of a battery cell to an outside.

### Solution to Problem

A first aspect of the present invention is a battery pack mounted on a hybrid system and is a battery pack including a battery module for supplying electricity to a motor generator of the hybrid system, a control circuit for controlling the battery module, and a housing for accommodating the battery module and the control device, in which the battery module has a plurality of battery cells and a cell case for accommodating the plurality of battery cells, the control circuit has a BMU (Battery Management Unit) for monitoring and controlling a state of the entire battery pack, and a CMU (Cell Management Unit) for monitoring a state of the plurality of battery cells and sending information to the BMU, in which the CMU is mounted on the cell case in the battery module.

A second aspect of the present invention is a battery pack mounted on a hybrid system and including a battery module for supplying electricity to a motor generator of the hybrid system, a control circuit for controlling the battery module, a housing for accommodating the battery module and the control circuit, and a heat conducting member provided between each of the battery modules and the housing and having insulation.

### Advantageous Effects of Invention

According to the present invention, a battery pack which can flexibly respond to a specification change can be provided. In addition, according to the present invention, a battery pack which can efficiently release a heat of a battery cell to an outside can be provided.

### Brief Description of Drawings

[Fig. 1]

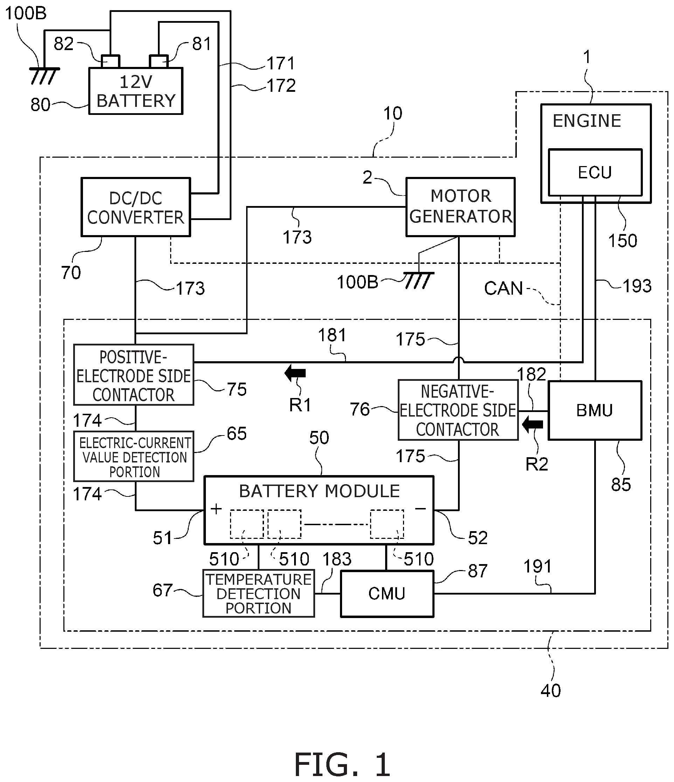

   Fig. 1 is a block diagram illustrating a hybrid system.
[Fig. 2]

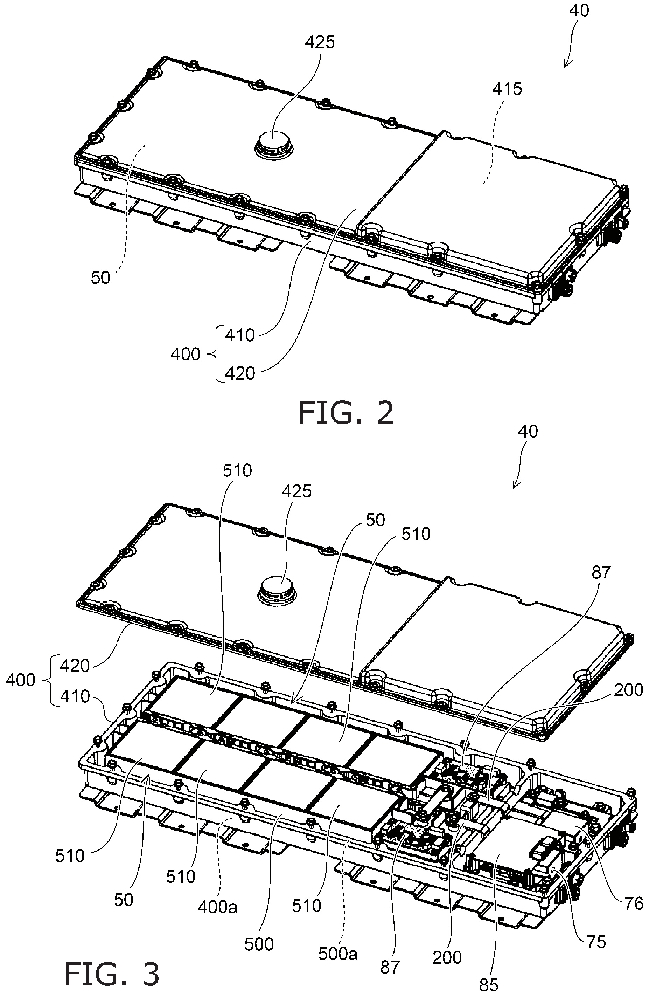

   Fig. 2 is an appearance perspective view exemplifying a battery pack according to this Embodiment.
[Fig. 3]
   Fig. 3 is a partial exploded perspective view exemplifying a battery pack according to this Embodiment.
[Fig. 4]

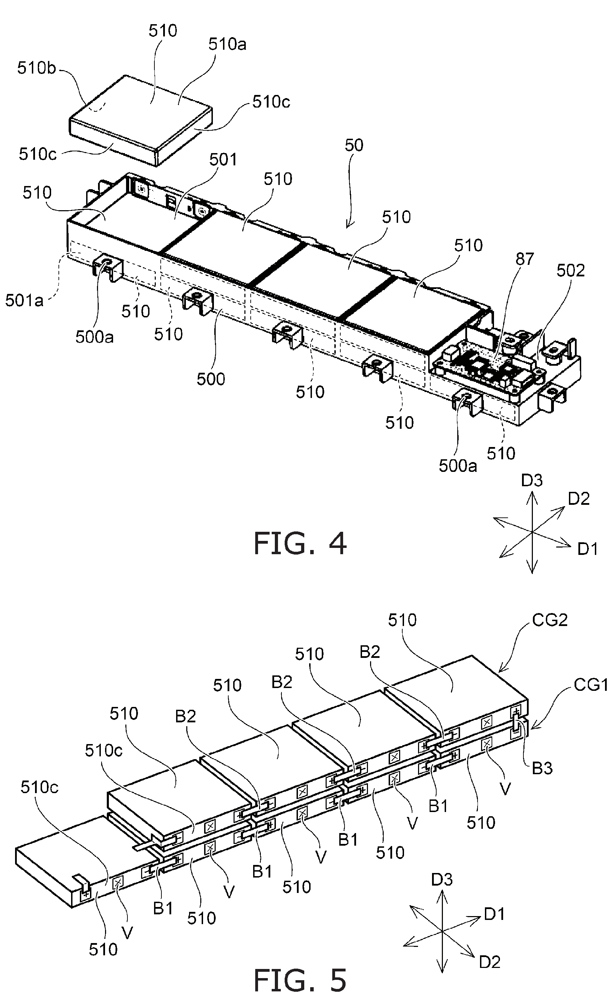

   Fig. 4 is a partial exploded perspective view exemplifying a battery module.
[Fig. 5]
   Fig. 5 is a schematic perspective view exemplifying connection of a plurality of battery cells.
[Fig. 6]

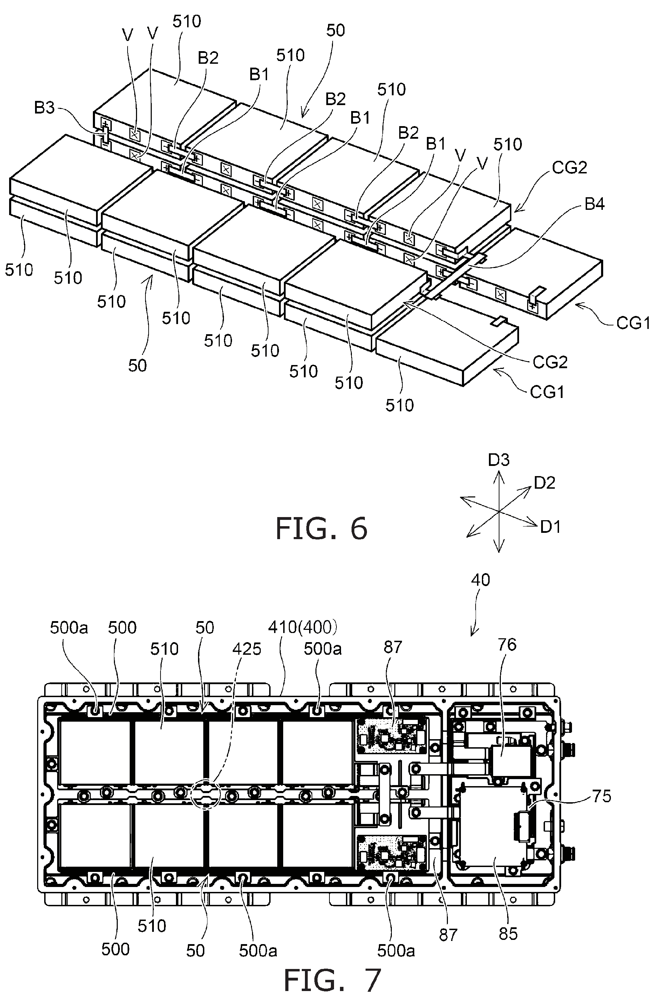

   Fig. 6 is a schematic perspective view exemplifying disposition of a plurality of battery modules.
[Fig. 7]
   Fig. 7 is a plan view exemplifying disposition of a plurality of the battery modules.
[Fig. 8]

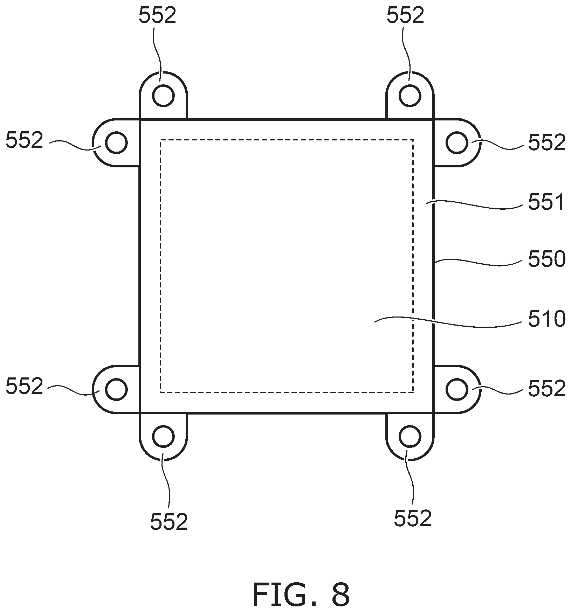

   Fig. 8 is a plan view exemplifying an individual cell case.
[Fig. 9]

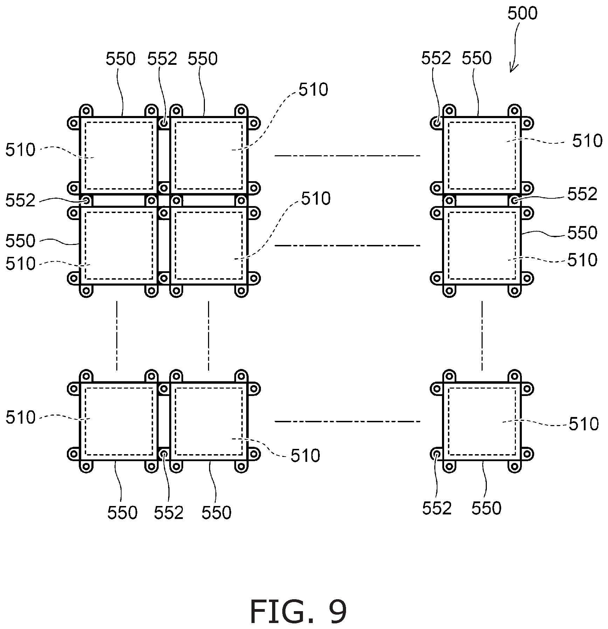

   Fig. 9 is a plan view illustrating a disposition example (No. 1) of an individual cell case.
[Fig. 10]

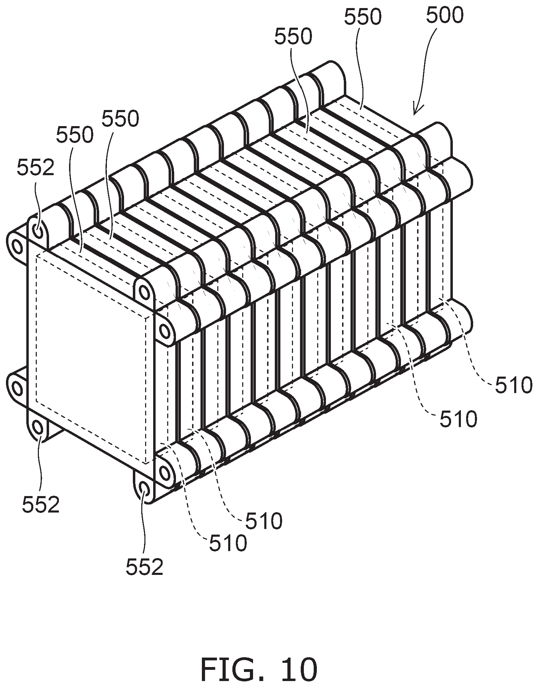

   Fig. 10 is a perspective view illustrating a disposition example (No. 2) of an individual cell case.
[Fig. 11]

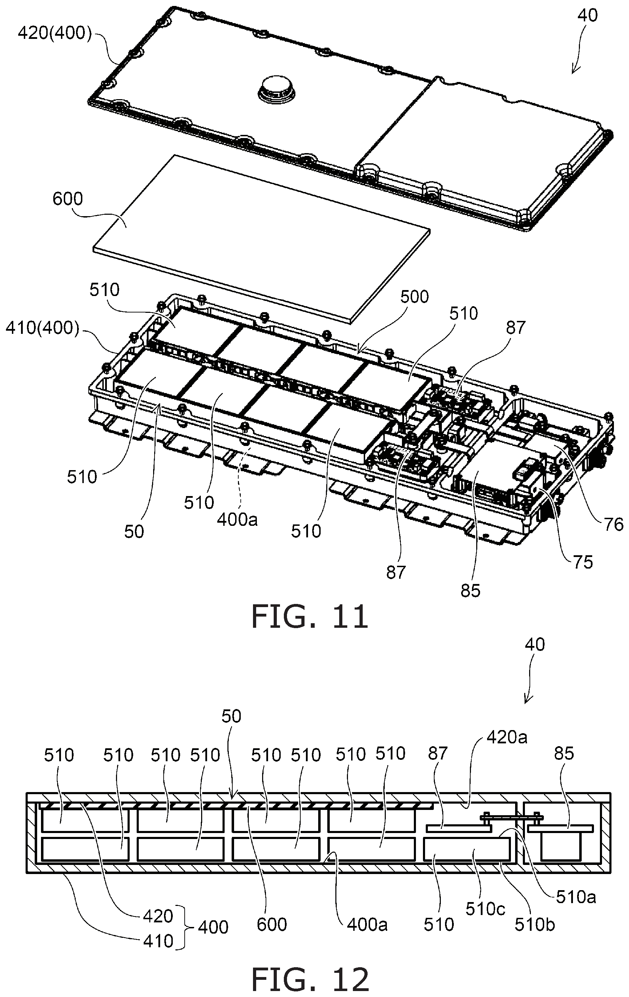

   Fig. 11 is a partial exploded perspective view exemplifying another battery pack according to this Embodiment.
[Fig. 12]
   Fig. 12 is a schematic sectional diagram exemplifying another battery pack according to this Embodiment.
[Fig. 13]

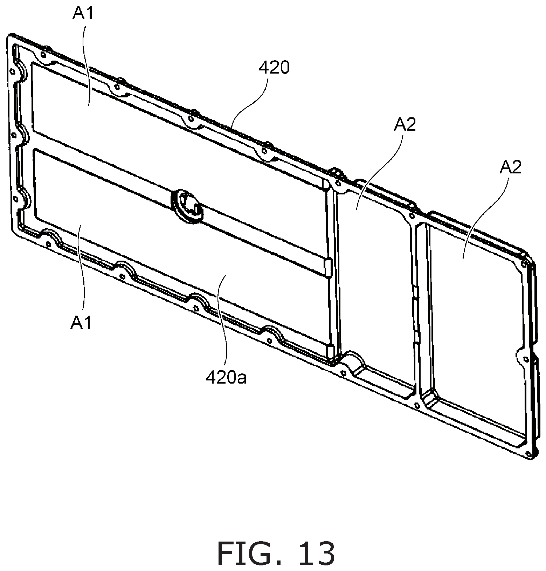

   Fig. 13 is a perspective view exemplifying a ceiling surface of a housing cover.

### Description of Embodiments

Hereinafter, a preferred Embodiment of the present invention will be explained with reference to the drawings.

It is to be noted that, the Embodiment which will be explained below is a preferred specific example of the present invention and thus, various technically preferable limitations are given, but a range of the present invention is not limited to these forms unless there is a description to the effect that the present invention is particularly limited in the following explanation. In addition, the same signs are given to the similar constituent elements, and detailed explanation will be omitted as appropriate.

### (Hybrid System)

Fig. 1 is a block diagram illustrating a hybrid system.

A battery pack 40 to which a housing according to this Embodiment is applied is mounted on a hybrid system 10 shown in Fig. 1. The hybrid system 10 includes an engine 1, a motor generator 2, and the battery pack 40. The hybrid system 10 according to this Embodiment further includes a DC/DC converter 70. The engine 1 is an internal combustion engine and is a diesel engine, for example. The engine 1 is mounted on a vehicle (a passenger car, a small-sized moving body and the like), for example, and industrial machines such as a construction machine, an agricultural machine and the like.

The engine 1 is a supercharging high-output multicylinder diesel engine such as a 3-cylinder engine, a 4-cylinder engine and the like, for example. However, the engine 1 is not limited to a diesel engine. The engine 1 has an ECU (Engine Control Unit) 150. The ECU 150 controls an operation of the engine 1 and controls the motor generator 2 and the DC/DC converter 70 by communicating with the motor generator 2 and the DC/DC converter 70 via a CAN (Controller Area Network), for example.

The motor generator 2 is operated by electricity supplied from the battery pack 40 and supports the engine 1 when power is required at start or at acceleration of a vehicle or the like on which the hybrid system 10 is mounted. In addition, the motor generator 2 converts kinetic energy of an industrial machine or the like on which the hybrid system 10 is mounted to electric energy and generates electricity.

The battery pack 40 has a battery module 50, a positive-electrode side contactor 75, a negative-electrode side contactor 76, an electric-current value detection portion 65, a temperature detection portion 67, a BMU (Battery Management Unit) 85, and a CMU (Cell Management Unit) 87. The battery module 50 is provided as a driving power-supply of the motor generator 2 and supplies electricity to the motor generator 2. The battery module 50 includes at least one battery cell 510. In the hybrid system 10 shown in Fig. 1, such a number of battery cells 510 that is needed to obtain a voltage of 48V, for example, are included in the battery module 50. As the battery cell 510, a lithium-ion battery (LiB), for example, is cited. However, the battery cell 510 in this Embodiment is not necessarily limited to a lithium-ion battery. The battery module 50 has a positive-electrode (+) terminal 51 and a negative-electrode (-) terminal 52.

The positive-electrode side contactor 75 is provided in an electric circuit between the positive-electrode terminal 51 of the battery module 50 and the motor generator 2. Specifically, as shown in Fig. 1, the positive-electrode side contactor 75 is provided on positive-electrode wirings 173, 174 for connecting the positive-electrode terminal 51 of the battery module 50 and the motor generator 2. That is, an electric circuit between the positive-electrode terminal 51 of the battery module 50 and the motor generator 2 includes the positive-electrode wiring 173 and the positive-electrode wiring 174. The positive-electrode side contactor 75 is electrically connected to the ECU 150 by a signal line 181 and opens/closes the positive-electrode wirings 173 and 174 on the basis of a control signal transmitted from the ECU 150 through the signal line 181.

It is to be noted that the positive-electrode side contactor 75 may be electrically connected to a BMU 85. In this case, the positive-electrode side contactor 75 opens/closes the positive-electrode wirings 173, 174 on the basis of the control signal transmitted from the BMU 85. In the explanation of this Embodiment, a case in which the positive-electrode side contactor 75 is electrically connected to the ECU 150 by the signal line 181 will be cited as an example.

The negative-electrode side contactor 76 is provided in an electric circuit between the negative-electrode terminal 52 of the battery module 50 and the motor generator 2. Specifically, as shown in Fig. 1, the negative-electrode side contactor 76 is provided on a negative-electrode wiring 175 which connects the negative-electrode terminal 52 of the battery module 50 and the motor generator 2. That is, the electric circuit between the negative-electrode terminal 52 of the battery module 50 and the motor generator 2 includes the negative-electrode wiring 175. The negative-electrode side contactor 76 is electrically connected to the BMU 85 by a signal line 182, and opens/closes the negative-electrode wiring 175 on the basis of a control signal transmitted through the signal line 182 from the BMU 85.

It is to be noted that the negative-electrode side contactor 76 may be electrically connected to the ECU 150. In this case, the negative-electrode side contactor 76 performs opening/closing of the negative-electrode wiring 175 on the basis of the control signal transmitted from the ECU 150. In the explanation of this Embodiment, a case in which the negative-electrode side contactor 76 is electrically connected to the BMU 85 by the signal line 182 will be cited as an example.

The BMU 85 is an example of the "control circuit" of the present invention. The BMU 85 controls a voltage of the entire battery module 50. That is, the BMU 85 is electrically connected to the ECU 150 by a signal line 193 and controls the negative-electrode side contactor 76 on the basis of a control signal transmitted through a signal line 193 from the ECU 150. The ECU 150 and the BMU 85 communicate with each other by CAN, for example, and monitor the other's state.

In addition, the BMU 85 monitors a state of the battery module 50 and can detect abnormality of the battery module 50. For example, the BMU 85 detects overcharge (minor failure) abnormality or overcharge (major failure) abnormality on the basis of the voltage of the battery cell 510 obtained from the CMU 87. Alternatively, the BMU 85 detects overcharge (minor failure) abnormality or over discharge (major failure) abnormality on the basis of a voltage of the battery cell 510 obtained from the CMU 87. Alternatively, the BMU 85 detects over-temperature (minor failure) abnormality on the basis of a temperature of the battery cell 510 obtained from the CMU 87. Alternatively, the BMU 85 detects over-current abnormality on the basis of an electric-current value obtained from the electric-current value detection portion 65 on the positive-electrode wiring 174.

The CMU 87 is an example of the "control circuit" of the present invention. The CMU 87 monitors a state of the battery cell 510 included in the battery module 50 and sends information to the BMU 85. When a plurality of the battery cells 510 are included in the battery module 50, the CMU 87 monitors a voltage of each of the battery cells 510 and sends information related to the voltage of each of the battery cells 510 to the BMU 85 via a signal line 191. In addition, the CMU 87 obtains information on a temperature of the battery cell 510 detected by the temperature detection portion 67 through the signal line 183 and sends the information related to the temperature of the battery cell 510 to the BMU 85 via the signal line 191. The CMU 87 may be provided separately from the BMU 85 or may be provided integrally with the BMU 85.

As described above, the negative-electrode wiring 175 electrically connects the negative-electrode terminal 52 of the battery module 50 and the motor generator 2 and becomes a gland 100B. For example, the negative-electrode wiring 175 is connected to a body of a vehicle or the like on which the hybrid system 10 is mounted and is grounded. The positive-electrode wiring 173 electrically connects the positive-electrode terminal 51 of the battery module 50 and the motor generator 2 and electrically connects the motor generator 2 and the DC/DC converter 70. As the hybrid system 10 shown in Fig. 1, when the battery module 50 is a 48V lithium-ion battery, potentials of the positive-electrode wirings 173, 174 with respect to the negative-electrode wiring 175 is 48V.

The DC/DC converter 70 is electrically connected to a battery 80 via a positive-electrode wiring 171 and a negative-electrode wiring 172. As the battery 80, a 12V lead storage battery can be cited, as an example. The negative-electrode wiring 172 electrically connects a negative-electrode terminal 82 of the battery 80 and the DC/DC converter 70 and becomes a gland 100B. For example, the negative-electrode wiring 172 is connected to a body of a vehicle or the like on which the hybrid system 10 is mounted and is grounded. The positive-electrode wiring 171 electrically connects a positive-electrode terminal 81 of the battery 80 and the DC/DC converter 70. As in the hybrid system 10 shown in Fig. 1, when the battery 80 is a 12V lead storage battery, a potential of the positive-electrode wiring 171 with respect to the negative-electrode wiring 172 is 12V.

As described above, the motor generator 2 converts kinetic energy of a vehicle or the like on which the hybrid system 10 is mounted to electric energy and generates electricity by using a regenerative energy or the like. And the motor generator 2 supplies a voltage to the battery module 50 so as to charge the battery module 50 and supplies a voltage to the battery 80 so as to charge the battery 80. Here, when the hybrid system 10 shown in Fig. 1 is cited as an example, a potential of the positive-electrode wiring 173 with respect to the negative-electrode wiring 175 is 48V. That is, a power-generation potential of the motor generator 2 is 48V. On the other hand, a potential of the positive-electrode wiring 171 with respect to the negative-electrode wiring 172 is 12V. Thus, the DC/DC converter 70 converts the voltage of 48V generated by the motor generator 2 to a voltage of 12V. As a result, the motor generator 2 can supply the voltage of 12V to the battery 80 via the DC/DC converter 70 and charge the battery 80.

In addition, the DC/DC converter 70 is electrically connected to the battery module 50 and the battery 80 and can perform charging and discharging between the battery module 50 and the battery 80 on the basis of a control signal transmitted from the ECU 150. For example, the DC/DC converter 70 can perform discharging of the battery module 50 and charging of the battery 80 by converting the voltage and by causing a constant electric-current (10A, for example) to flow from the battery 80 toward the battery module 50. Alternatively, the DC/DC converter 70 can perform discharging of the battery 80 and charging of the battery module 50 by converting the voltage and by causing a constant electric-current (10A, for example) to flow from the battery 80 toward the battery module 50, for example.

The hybrid system 10 according to this Embodiment has a function capable of safely shutting down an electric circuit which supplies electricity from the battery module 50 to the motor generator 2, when abnormality occurs in the battery module 50 or the entire hybrid system 10 is shut down.

When an ignition switch is turned on, for example, the ECU 150 electrically connects the positive-electrode wiring 174 by executing control of transmitting a control signal to the positive-electrode side contactor 75 via the signal line 181 and closing the positive-electrode side contactor 75. In addition, the BMU 85 electrically connects the negative-electrode wiring 175 by executing control of closing the negative-electrode side contactor 76 on the basis of the control signal transmitted from the ECU 150 via the signal line 193. As a result, the battery module 50 can supply electricity to the motor generator 2.

On the other hand, when the ignition switch is turned off, for example, the ECU 150 electrically shuts down the positive-electrode wiring 174 by executing control of transmitting a control signal to the positive-electrode side contactor 75 through the signal line 181 and opening the positive-electrode side contactor 75. In addition, the BMU 85 electrically shuts down the negative-electrode wiring 175 by executing control of opening the negative-electrode side contactor 76 on the basis of the control signal transmitted from the ECU 150 via the signal line 193. As a result, the supply of electricity from the battery module 50 to the motor generator 2 is stopped.

In addition, when the BMU 85 detects abnormality of the battery module 50, for example, the ECU 150 electrically shuts down the positive-electrode wiring 174 by executing control of transmitting a first shut-down signal R1 to the positive-electrode side contactor 75 via the signal line 181 and opening the positive-electrode side contactor 75. In addition, the BMU 85 electrically shuts down the negative-electrode wiring 175 by executing control of transmitting a second shut-down signal R2 to the negative-electrode side contactor 76 via the signal line 182 singularly and not depending on a control signal transmitted from the ECU 150 and opening the negative-electrode side contactor 76.

Alternatively, as described above, the ECU 150 and the BMU 85 communicate with each other and monitor the other's state. Thus, when the ECU 150 detects abnormality of the BMU 85, the ECU 150 electrically shuts down the positive-electrode wiring 174 by executing control of transmitting the first shut-down signal R1 to the positive-electrode side contactor 75 via the signal line 181 and opening the positive-electrode side contactor 75. On the other hand, when the BMU 85 detects abnormality of the ECU 150, the BMU 85 electrically shuts down the negative-electrode wiring 175 by executing control of transmitting the second shut-down signal R2 to the negative-electrode side contactor 76 via the signal line 182 singularly and not depending on a control signal transmitted from the ECU 150 and opening the negative-electrode side contactor 76.

According to the above-described hybrid system 10, two contactors (in this Embodiment, the positive-electrode side contactor 75 and the negative-electrode side contactor 76) are provided in the electric circuit which supplies electricity from the battery module 50 to the motor generator 2 (in this Embodiment, the positive-electrode wirings 173, 174 and the negative-electrode wiring 175), and the ECU 150 controls the positive-electrode side contactor 75, while the BMU 85 controls the negative-electrode side contactor 76. Thus, even when abnormality occurs in the battery module 50 or when abnormality occurs in either one of the ECU 150 and the BMU 85, the hybrid system 10 according to this Embodiment can shut down the electric circuit which supplies electricity from the battery module 50 to the motor generator 2. As a result, the hybrid system 10 can improve the safety related to the battery module 50 which supplies electricity to the motor generator 2.

### (Battery Pack)

Fig. 2 is an appearance perspective view exemplifying a battery pack according to this Embodiment.

Fig. 3 is a partial exploded perspective view exemplifying a battery pack according to this Embodiment.

In Fig. 3, a state in which a housing cover 420 in a housing 400 of the battery pack 40 is open is shown.

The battery pack 40 includes the battery module 50, a control circuit including the BMU 85 and the CMU 87, and the housing 400 for accommodating the battery module 50 and the control circuit. The housing main body 410 and the housing cover 420 are formed by casting using a metal material including aluminum, for example. On a joint between the housing main body 410 and the housing cover 420, a seal (not shown) is provided, and by covering the housing main body 410 with the housing cover 420 and by fastening and fixing them with a screw, for example, an inside of the housing 400 is brought into a water-tight state.

The battery module 50 accommodated in the housing 400 has a plurality of battery cells 510. The plurality of battery cells 510 are accommodated in a cell case 500. The cell case 500 has a fixing part 500a for fixing the plurality of battery cells 510 to the housing 400 in an accommodated state. One unit of the battery module 50 may be accommodated in one unit of the housing 400 or a plurality of the battery modules 50 may be accommodated.

In the example shown in Fig. 2 and Fig. 3, two units of the battery modules 50 are accommodated in one unit of the housing 400. For example, when the battery pack 40 of a 48V-specification is to be constituted, two units of the 24V-specification battery modules 50 are accommodated in the housing 400 and they are connected in series. In the cell case 500 in one unit of the battery module 50, nine pieces of the battery cells 510 are accommodated.

In this Embodiment, in the cell case 500 in one unit of the battery module 50, the CMU 87 is mounted. That is, the CMU 87 for monitoring a state of each of the plurality of battery cells 510 accommodated in the cell case 500 is mounted on the cell case 500 accommodating the battery cells 510.

As shown in Fig. 3, in one unit of the battery pack 40, when two units of the battery modules 50 are to be accommodated in the housing 400, for example, such a constitution is adopted that one unit of the BMU 85 is shared. That is, in the housing 400, one unit of the BMU 85 is provided, and control for monitoring a plurality of (two, for example) entire battery modules 50 is executed by this BMU 85. Since in each of the battery modules 50, the CMU 87 for monitoring the plurality of battery cells 510 in the battery module 50 is provided in the cell case 500, even when the number of the battery modules 50 accommodated in the battery pack 40 is changed, it is only necessary to change only the disposition constitution of the battery module 50 without changing the BMU 85.

In the case of the battery pack 40 according to this Embodiment, for example, the number of the battery modules 50 accommodated in the housing 400 is 2 with the 48V-specification, but when the specification is to be changed to 1 piece with the voltage of 24V, it can be handled only by removing one of the two battery modules 50 from the housing 400. In addition, when three units of the battery modules 50 are accommodated in one unit of the housing 400 so as to have 72V-specification, by changing the size such that the housing 400 can accommodate three units of the battery modules 50, it can be handled without a large-scale design change of the BMU 85.

### (Battery Module)

Fig. 4 is a partial exploded perspective view exemplifying a battery module.

Fig. 4 shows a state in which one piece of the battery cell has been removed from the cell case.

The cell case 500 is formed of a resin, for example. The cell case 500 has an accommodating part 501 for accommodating the battery cell 510 and a mounting part 502 on which the CMU 87 is mounted. The accommodating part 501 is provided in a box shape capable of accommodating a plurality of the battery cells 510, and the mounting part 502 is provided in a flat state such that a substrate of the CMU 87 can be mounted easily. In this Embodiment, a plurality of the battery cells 510 are provided in parallel and stacked on the accommodating part 501.

The battery cell 510 is provided in a substantially cuboid shape having a planar part 510a and a bottom surface part 510b facing each other and four side surface parts 510c having an area smaller than those of the planar part 510a and the bottom surface part 510b. And the battery cells 510 are disposed in parallel along the bottom surface 400a such that the bottom surface part 510b faces the bottom surface 400a of the housing 400 (see Fig. 3). Specifically, it is disposed such that the bottom surface part 510b of the battery cell 510 opposes a mounting surface 501a, which is a bottom inside of the accommodating part 501 of the cell case 500. When the cell case 500 is accommodated in the housing 400, the mounting surface 501a of the accommodating part 501 becomes substantially in parallel to the bottom surface 400a of the housing 400. Therefore, the bottom surface part 510b of the battery cell 510 is disposed by opposing the bottom surface 400a of the housing 400. Since each of the plurality of battery cells 510 is mounted by facing the bottom surface part 510b to the mounting surface 501a, size reduction in the thickness of the battery module 50 can be promoted.

In the example shown in Fig. 4, the battery cells 510 are accommodated in the accommodating part 501 of the cell case 500 in the state of being stacked in two stages. Five battery cells 510 are disposed in parallel on the first stage, and four battery cells 510 are disposed in parallel on the second cell. There is only one stage of the battery cell 510 on the farthest end, and the mounting part 502 on which the CMU 87 is mounted is provided in a space to be the second stage above that.

Fig. 5 is a perspective view exemplifying connection of the plurality of battery cells.

In Fig. 5, a perspective view seen from the side opposite to Fig. 4 is illustrated with respect to the plurality of battery cells 510 in Fig. 4. For convenience of explanation, in Fig. 5, the cell case 500 and the CMU 87 are omitted. For the cell case 500 and the CMU 87, it is assumed to be referred to Fig. 4.

When an odd number (n pieces) of the battery cells 510 are to be accommodated in one cell case 500, it is preferable that one piece of the cell case 500 accommodates the first stage cell group CG1 in which {(n + 1) / 2} pieces of the battery cells 510 are disposed in parallel to the direction along the bottom surface 400a of the housing 400 (see Fig. 3) (hereinafter, also referred to simply as the "first direction D1") and the second stage cell group CG2 in which {(n - 1) / 2} pieces of the battery cells 510 are disposed in parallel to the first direction D1 and stacked on the first stage cell group CG1 in the normal direction of the bottom surface 400a of the housing 400 (hereinafter, also referred to simply as the "slope direction D3").

For example, as shown in Fig. 5, when 9 pieces of the battery cells 510 are accommodated in one unit of the cell case 500, by assuming that they are stacked in two stages, the first stage shall be referred to as the first stage cell group CG1 and the second stage as the second stage cell group CG2. In the first stage cell group CG1, five pieces of the battery cells 510 are disposed in parallel in the first direction D1, and in the second stage cell group CG2, four pieces of the battery cells 510 are disposed in parallel in the first direction D1. The 9 pieces of the battery cells 510 disposed in parallel as above are accommodated in the accommodating part 501 of the cell case 500.

The CMU 87 is disposed on a side of the second stage cell group CG2 of the first stage cell group CG1 and at a position aligned with the second stage cell group CG2 in the first direction D1. For example, in the case of 9 pieces of the battery cells 510, 5 pieces of the battery cells 510 are disposed in parallel as the first stage cell group CG1, 4 pieces of the battery cells 510 are disposed in parallel as the second stage cell group CG2, and they are stacked in a slope direction D3. Thus, adjacent to the second stage cell group CG2, an empty space for one cell is formed. This empty space is used as the mounting part 502 shown in Fig. 4, and the CMU 87 is disposed here. As a result, effective use of a space of the battery module 50 can be promoted. It is to be noted that, in this Embodiment, an example of an odd number of the battery cells 510 provided in one unit of the battery module 50 is illustrated, but an even number of the battery cells 510 may be provided.

As shown in Fig. 5, on one of the side surface parts 510c of the cuboid-shaped battery cell 510, a positive electrode +, a negative electrode -, and a valve V (cell valve) for emitting a gas are provided. When a plurality of the battery cells 510 are mounted and stacked, the side surface parts 510c on which the positive electrode + and the negative electrode - are provided are faced to the same side. At this time, the alignment of the positive electrode + and the negative electrode - of the battery cell 510 are made opposite to each other between the first stage cell group CG1 and the second stage cell group CG2. That is, in the first stage cell group CG1, the battery cells 510 are disposed such that the electrodes of the plurality of battery cells 510 are aligned in an order of the positive electrode +, the negative electrode -, the positive electrode +, the negative electrode - ... from one end to the other end in the first direction, for example. Conversely, in the second stage cell group CG2, the battery cells 510 are disposed such that the electrodes of the plurality of battery cells 510 are aligned in order of the negative electrode -, the positive electrode +, the negative electrode -, the positive electrode + ....

And the plurality of battery cells 510 constituting the first stage cell group CG1 are electrically conducted and connected by a first connection bus bar B1 in the alignment order from the one end to the other end of the first direction D1. In addition, the plurality of battery cells 510 constituting the second stage cell group CG2 are electrically conducted and connected by a second connection bus bar B2 in the alignment order from the one end to the other end of the first direction D1. And the battery cell 510 disposed on the other end of the first stage cell group CG1 and the battery cell 510 disposed on the other end of the second stage cell group CG2 are electrically conducted and connected by a third connection bus bar B3. Here, the bus bar is constituted by a metal plate material (copper, for example) into a predetermined shape. It is to be noted that, in this Embodiment, the bus bar is used as a member for electrically conducting and connecting the adjacent battery cells 510, but a conductive wire other than the bus bar may be used.

In the battery cells 510 disposed on the other end of each of the first stage cell group CG1 and the second stage cell group CG2 (two pieces of the battery cells 510 stacked on the other end), polarities of the electrodes align with the positive electrode + and the negative electrode - in the stacking direction and thus, only by mounting the third connection bus bar B3 straight in the stacking direction, the plurality of battery cells 510 of the first stage cell group CG1 and the second stage cell group CG2 are connected in series.

Fig. 6 is a perspective view exemplifying the disposition of the plurality of battery modules.

Fig. 7 is a plan view exemplifying the disposition of the plurality of battery modules.

Here, in Fig. 6 and Fig. 7, a case in which two units of the battery modules 50 are disposed as shown in Fig. 5 is an example. For convenience of explanation, the cell case 500 and the CMU 87 are omitted in Fig. 6. For the cell case 500 and the CMU 87, it is assumed that Fig. 4 is to be referred to.

When a plurality of the battery modules 50 are disposed, it is preferable that a plurality of the battery modules 50 are disposed in parallel in a second direction (hereinafter, referred to simply as the "second direction D2") crossing the first direction D1 along the bottom surface 400a (see Fig. 2) of the housing 400 (see Fig. 2). And in this disposition of the plurality of battery modules 50, the battery cells 510 are disposed so that the positive electrode +, the negative electrode -, and the valve V oppose one another between the adjacent battery modules 50.

As a result, the first connection bus bar B1, the second connection bus bar B2, and the third connection bus bar B3 in each of the battery modules 50 are disposed so as to face one another between the adjacent battery modules 50. Since the first connection bus bar B1, the second connection bus bar B2, and the third connection bus bar B3 in each of the battery modules 50 face one another, conduction paths in the plurality of battery modules 50 can be put in order easily, and space-saving of the battery pack 40 can be promoted.

In addition, the battery modules 50 adjacent to each other in the second direction D2 are electrically conducted and connected by a fourth connection bus bar B4 on one end in the first direction D1. In this case, it is preferable that two battery cells 510 connected by the fourth connection bus bar B4 are disposed on the same stage. As a result, the fourth connection bus bar B4 can be mounted on the same stage.

When the adjacent battery modules 50 are connected in series, in order to dispose the two battery cells 510 connected by the fourth connection bus bar B4 on the same stage, it is only necessary that, in the plurality of battery cells 510 of the adjacent battery modules 50, the positive electrode + and the negative electrode - are aligned opposite to each other in the two battery cells 510 facing each other (the two battery cells 510 facing in the second direction D2 between the adjacent battery modules 50). As a result, the positive electrode + and the negative electrode - of each of the two battery cells 510 connected by the fourth connection bus bar B4 face each other, and the connection of the positive electrode + and the negative electrode - of each other by the fourth connection bus bar B4 can be realized in the shortest distance.

For example, the battery modules 50 on one side of the two adjacent battery modules 50 are connected by the first connection bus bar B1 in an order from the battery cell 510 on one end toward the battery cell 510 on the other end in the first direction D1 of the first stage cell group CG1, the battery cell 510 of the first stage cell group CG1 located on the other end and the battery cell 510 of the second stage cell group CG2 are connected by the third connection bus bar B3, and the battery cell 510 on the other end in the first direction of the second stage cell group CG2 toward the battery cell 510 on one end by the second connection bus bar B2.

On the other hand, the battery module 50 on the other side of the two adjacent battery modules 50 is, opposite to the battery module 50 on the one side, connected by the second connection bus bar B2 in an order from the battery cell 510 on one end in the first direction D1 of the second stage cell group CG2 toward the battery cell 510 on the other end, the battery cell 510 of the second stage cell group CG2 located on the other end and the battery cell 510 of the first stage cell group CG1 are connected by the third connection bus bar B3, and from the battery cell 510 on the other end toward the battery cell 510 on one end in the first direction of the first stage cell group CG1 are connected in an order by the first connection bus bar B1.

And with respect to the two adjacent battery modules 50, the battery cells 510 on one ends in the first direction D1 of the second stage cell groups CG2 are connected by the fourth connection bus bar B4.

That is, the connection constitution by the first connection bus bar B1 to the fourth connection bus bar B4 is such a connection constitution that connection is made from the one end to the other end of the first stage cell group CG1 on the one side of the two adjacent battery modules 50, the connection is made with the second stage cell group CG2 on the other end and returns to the one end, connected to the battery module 50 on the other side on the other end of the second stage cell group CG2, connected from one end to the other end of the second stage cell group CG2, connected to the first stage cell group CG1 on the other end, and returns to the one end side. By means of the connection constitution as above, the connection can be made in a shortest path.

In addition, in the battery module 50, a wiring (not shown) for sending information indicating a state (a voltage or a temperature) of the battery cell 510 to the CMU 87 is provided. When a plurality of the battery modules 50 are disposed, this wiring is disposed between the adjacent battery modules 50 for sending to the CMU 87. As a result, a space between the adjacent battery modules 50 is effectively used, and the wirings can be collected and sent to the CMU 87.

In addition, in each of the battery modules 50, the valve V of each of the battery cells 510 is disposed to face each other between the adjacent battery modules 50 and thus, a space between the adjacent battery modules 50 can be used as a flow path of a gas emitted from the valve.

Thus, as shown in Fig. 3, when a vent valve 425 which is opened when an internal pressure of the housing 400 reaches a predetermined pressure is provided in the housing cover 420, it is preferable that the vent valve 425 is disposed at a position overlapping a space between the adjacent battery modules 50 when seen in a normal direction (see the drawing). As a result, with a space between the adjacent battery modules 50 as a flow path, the gas emitted from the valve is efficiently discharged from the vent valve 425.

It is to be noted that, in the above, such an example is illustrated that five pieces of the battery cells 510 are disposed in parallel in the first stage cell group CG1, and four pieces of the battery cells 510, less than the first stage cell group CG1 by one, are disposed in parallel in the second stage cell group CG2, but the present invention is not limited to this. As the number of the battery cells 510 of the second stage cell group CG2, it may be smaller than that of the first stage cell group CG1 by two or more, the parallel disposition of the plurality of battery cells 510 of the second stage cell group CG1 may be noncontinuous, or the position of the mounting part 502 (see Fig. 4) does not have to be at an end part of the second stage cell group CG2.

### (Individual Cell Case)

Fig. 8 is a plan view exemplifying an individual cell case.

The individual cell case 550 is a case for accommodating one piece of the battery cell 510. The individual cell case 550 includes an individual cell case main body 551 for accommodating one piece of the battery cell 510 and a connection part 552 provided at a peripheral edge part of the individual cell case main body 551. The individual cell case main body 551 is provided in a box shape accommodating one piece of the battery cell 510 inside. An outline on a plan view of the individual cell case main body 551 is a substantial rectangle (a square, for example). The connection part 552 is provided at each corner part of the individual cell case main body 551. It is to be noted that, the connection part 552 may be provided at a center of each side of the individual cell case main body 551. In the connection part 552, a hole for bolt fastening may be provided, or an engagement part by fitting of irregularity may be provided.

Fig. 9 is a plan view illustrating a disposition example (No. 1) of the individual cell case.

The example shown in Fig. 9 is a constitution in which a plurality of the individual cell cases 550 are connected laterally and longitudinally along a plane. When the plurality of the individual cell cases 550 are connected, one piece of the cell case 500 is constituted. The individual cell cases 550 adjacent to each other laterally and longitudinally are connected by using the connection parts 552 of each other. The plurality of the individual cell cases 550 may be connected laterally and longitudinally along the same plane or the plurality of individual cell cases 550 may be connected in one direction laterally or longitudinally on the same plane. In addition, the plurality of individual cell cases 550 connected on the same plane may be stacked so as to have a multi-stage constitution.

Fig. 10 is a perspective view illustrating a disposition example (No. 2) of the individual cell case.

The example shown in Fig. 10 is such a constitution that a plurality of the individual cell cases 550 are superposed and connected. By connecting the plurality of individual cell cases 550, one cell case 500 is constituted. The individual cell cases 550 adjacent in the superposing direction are connected by using the connection parts 552 of each other. The fastening may be performed by a bolt such that it penetrates the connection parts 552 of all the individual cell cases 550 which are superposed.

In the connection of the plurality of individual cell cases 550 shown in Fig. 9 and Fig. 10, it may be so configured that the positive electrode + or the negative electrode - of the battery cell 510 and the connection part 552 are electrically conducted, and the adjacent (or overlapping) individual cell cases 550 are connected by the connection part 552 so that electrical connection in series or in parallel is made possible for the battery cells 510 of the plurality of individual cell cases 550.

According to this Embodiment as above, the battery pack 40 which can flexibly respond to the specification change can be provided.

### (Another Battery Pack)

Subsequently, another battery pack will be explained.

It is to be noted that, when constituent elements of another battery pack 40 are similar to the constituent element of the battery pack 40 described above in relation with Fig. 2 to Fig. 10, duplicated explanation is omitted as appropriate, and different points will be mainly explained below.

Fig. 11 is a partial exploded perspective view exemplifying another battery pack according to this Embodiment.

In Fig. 11, a state in which the housing cover 420 in the housing 400 of the battery pack 40 and a heat-conductive member 600 are open is illustrated.

Fig. 12 is a schematic sectional diagram exemplifying the battery pack according to this Embodiment.

It is to be noted that the appearance perspective view when another battery pack is viewed diagonally is similar to the appearance perspective view shown in Fig. 2.

The battery pack 40 includes the battery module 50, a control circuit including the BMU 85 and the CMU 87, and the housing 400 accommodating the battery module 50 and the control circuit. The housing main body 410 and the housing cover 420 are formed by casting using a metal material including aluminum, for example. On a joint between the housing main body 410 and the housing cover 420, a seal (not shown) is provided, and by covering the housing main body 410 with the housing cover 420 and by fastening and fixing them with a screw, for example, an inside of the housing 400 is brought into a water-tight state.

The battery module 50 accommodated in the housing 400 has a plurality of the battery cells 510, for example. In one unit of the housing 400, one unit of the battery module 50 may be accommodated, or a plurality of the battery modules 50 may be accommodated.

The battery cell 510 is provided in a substantially cuboid shape having planar parts facing each other (the upper surface part 510a and the bottom surface part 510b), and four side surface parts 510c having an area smaller than those of the upper surface part 510a and the bottom surface part 510b. And the battery cells 510 are disposed in parallel along the bottom surface 400a such that the bottom surface part 510b faces the bottom surface 400a of the housing 400.

The battery module 50 may have a plurality of the battery cells 510. In this case, the plurality of battery cells 510 are preferably disposed in parallel along the bottom surface 400a of the housing 400. In addition, the battery cell 510 may be disposed in one stage on the housing 400 or may be disposed in plural stages. In the case of the plural stages, it is preferable that the upper surface part 510a and the bottom surface part 510b of the two battery cells 510 in a stacking direction are disposed so as to face each other.

Between the battery module 50 accommodated in the housing 400 and the housing 400, the heat-conductive member 600 having insulation is provided. For the heat-conductive member 600, a material having insulation and heat conductivity such as a silicone sheet, for example, is used. The heat-conductive member 600 is disposed between the upper surface part 510a of the battery cell 510 and the ceiling surface 420a of the housing cover 420 (housing 400) facing the bottom surface 400a of the housing 400. It is preferable that the heat-conductive member 600 is in contact with each of the upper surface part 510a of the battery cell 510 and the ceiling surface 420a of the housing cover 420. It is to be noted that some member may be interposed between the heat-conductive member 600 and the upper surface part 510a and between the heat-conductive member 600 and the ceiling surface 420a.

Since the bottom surface part 510b is disposed as the battery cell 510 so as to face the bottom surface 400a of the housing 400, the upper surface part 510a of the battery cell 510 is faced with the ceiling surface 420a of the housing cover 420. In the battery cell 510, an area of the upper surface part 510a is larger than an area of the side surface part 510c and thus, by bringing the upper surface part 510a into contact with the heat-conductive member 600 (including a case of contact via the member), a heat generated in the battery cell 510 can be effectively transmitted to the heat-conductive member 600. In addition, since the heat-conductive member 600 is brought into contact with the ceiling surface 420a of the housing cover 420 (including a case of contact via the member), the heat having been transmitted from the battery cell 510 to the heat-conductive member 600 is efficiently transmitted to the housing cover 420 and can be easily released from the housing 400 to the outside.

The battery pack 40 may have a plurality of the battery modules 50. In this case, the plurality of battery modules 50 are preferably disposed in parallel along the bottom surface 400a of the housing 400. As a result, since the upper surface parts 510a of the battery cells 510 do not overlap in the plurality of battery modules 50, it is advantageous on a heat dissipation surface.

In such a configuration that the plurality of battery modules 50 are disposed in parallel, the heat-conductive member 600 may have a part disposed between the adjacent battery modules 50 in the plurality of battery modules 50. By disposing a part of the heat-conductive member 600 between the adjacent battery modules 50, a heat can be easily transmitted not only from the upper surface part 510a of the battery cell 510 but also from a part of the side surface part 510c to the heat-conductive member 600.

Fig. 13 is a perspective view exemplifying a ceiling surface of the housing cover.

The housing cover 420 is formed by casting by aluminum, for example. The ceiling surface 420a of the housing cover 420 has a first area A1 facing the battery module 50 (see Fig. 11) and a second area A2 other than that. In the housing cover 420, a surface roughness of the first area A1 is preferably set lower than the surface roughness of the second area A2. For example, in a state in which the housing cover 420 is formed by casting, a surface of a mold by casting is transferred both to the first area A1 and the second area A2, and the surface roughness is relatively rough. Thus, by performing cutting or the like on the first area A1, machining is performed with the surface roughness of the first area A1 lower than that of the second area A2. As a result, a degree of close contact between the first area A1 in the ceiling surface 420a of the housing cover 420 and the heat-conductive member 600 is improved, and the heat can be transmitted from the heat-conductive member 600 to the housing cover 420 more effectively.

According to this Embodiment as above, the battery pack 40 which can efficiently release a heat of the battery cell 510 to an outside can be provided.

The Embodiment of the present invention has been explained as above. However, the present invention is not limited to the above-described Embodiment but is capable of various changes within a range not departing from the scope of claims. For example, the configuration of the above-described Embodiment may be partially omitted or arbitrarily combined differently from the above.

### Reference Signs List

- 1: Engine
- 2: Motor generator
- 10: Hybrid system
- 40: Battery pack
- 50: Battery module
- 51: Positive-electrode terminal
- 52: Negative-electrode terminal
- 65: Electric-current value detection portion
- 67: Temperature detection portion
- 70: DC/DC converter
- 75: Positive-electrode side contactor
- 76: Negative-electrode side contactor
- 80: Battery
- 81: Positive-electrode terminal
- 82: Negative-electrode terminal
- 85: BMU
- 87: CMU
- 100B: Gland
- 150: ECU
- 171: Positive-electrode wiring
- 172: Negative-electrode wiring
- 173: Positive-electrode wiring
- 174: Positive-electrode wiring
- 175: Negative-electrode wiring
- 181: Signal line
- 182: Signal line
- 183: Signal line
- 191: Signal line
- 193: Signal line
- 400: Housing
- 400a: Bottom surface
- 410: Housing main body
- 420: Housing cover
- 420a: Ceiling surface
- 425: Vent valve
- 500: Cell case
- 500a: Fixing part
- 501: Accommodating part
- 501a: Mounting surface
- 502: Mounting part
- 510: Battery cell
- 510a: Upper surface part (planar part)
- 510b: Bottom surface part (planar part)
- 510c: Side surface part
- 550: Individual cell case
- 551: Individual cell case main body
- 552: Connection part
- 600: Heat-conductive member
- A1: First area
- B1: First connection bus bar
- B2: Second connection bus bar
- B3: Third connection bus bar
- B4: Fourth connection bus bar
- CG1: First stage cell group
- CG2: Second stage cell group
- D1: First direction
- D2: Second direction
- D3: Slope direction
- R1: First shut-down signal
- R2: Second shut-down signal
- V: Valve

## Claims

1. A battery pack mounted on a hybrid system comprising:
a battery module for supplying electricity to a motor generator of the hybrid system;
a control circuit for controlling the battery module; and
a housing for accommodating the battery module and the control circuit, wherein
the battery module includes:
a plurality of battery cells; and
a cell case for accommodating the plurality of battery cells;
the control circuit has:
a Battery Management Unit (BMU) for monitoring and controlling an entire state of the battery pack; and
a Cell Management Unit (CMU) for monitoring a state of each of the plurality of battery cells and sending information to the BMU, wherein
the CMU is mounted on the cell case in the battery module.

2. The battery pack according to claim 1, wherein
the cell case has a cell case main body, and a plurality of accommodating parts which is provided in the cell case main body and accommodates each of the plurality of battery cells.

3. The battery pack according to claim 1, wherein
the cell case has a plurality of individual cases for accommodating each of the plurality of battery cells.

4. The battery pack according to claim 1, wherein
the plurality of battery cells is disposed in parallel along a bottom surface of the housing and are stacked in a normal direction of the bottom surface.

5. The battery pack according to claim 1, wherein
all of the plurality of battery cells is disposed in parallel along a bottom surface of the housing.

6. The battery pack according to claim 1, wherein
each of the plurality of battery cells is provided in a substantially cuboid shape having a planar part and a bottom surface part facing each other and four side surface parts having an area smaller than those of the planar part and the bottom surface part; and
the plurality of battery cells is disposed in parallel along a bottom surface of the housing such that the bottom surface part opposes the bottom surface of the housing.

7. The battery pack according to claim 1, wherein
the battery module has n pieces (n is an odd number) of the battery cells;
the cell case accommodates:
a first stage cell group in which {(n + 1) / 2} pieces of the battery cells are disposed in parallel in a first direction along a bottom surface of the housing; and
a second stage cell group in which {(n - 1) / 2} pieces of the battery cells are disposed in parallel in the first direction and stacked on the first stage cell group in a normal direction of the bottom surface, wherein
the CMU is disposed on a side of the second stage cell group of the first stage cell group and at a position aligned with the second stage cell group in the first direction.

8. The battery pack according to claim 7, comprising:
a plurality of the battery modules, wherein
the plurality of battery modules is disposed in parallel to each other in a second direction crossing the first direction along the bottom surface.

9. The battery pack according to claim 8, wherein
the battery cell has a cell valve which is opened when a pressure in a cell exceeds a predetermined value; and
each of the cell valves of the battery cells facing each other in adjacent battery modules in the plurality of battery modules is disposed such that the cell valves face each other.

10. The battery pack, according to claim 9, further comprising:
a vent valve which is provided in the housing and is opened when an internal pressure of the housing reaches a predetermined pressure, wherein
the vent valve is disposed at a position overlapping a space between adjacent battery modules in the plurality of battery modules when viewed in the normal direction.

11. The battery pack according to claim 8, wherein
the battery cell has electrode terminals of a positive electrode and a negative electrode, respectively; and
among the plurality of battery modules, each of the electrode terminals of the battery cells facing each other between the adjacent battery modules is disposed such as to face each other.

12. The battery pack according to claim 11, wherein
between adjacent battery modules in the plurality of battery modules, a wiring for sending information indicating a state of each of the plurality of battery cells to the CMU is disposed.

13. The battery pack according to claim 7, wherein
the plurality of battery cells constituting the first stage cell group are electrically conducted and connected by a first connection bus bar in an order of alignment from one end toward the other end in the first direction;
the plurality of battery cells constituting the second stage cell group are electrically conducted and connected by a second connection bus bar in an order of alignment from the one end toward the other end in the first direction; and
the battery cell disposed at the other end of the first stage cell group and the battery cell disposed at the other end of the second stage cell group are electrically conducted and connected by a third connection bus bar.

14. The battery pack according to claim 13, comprising:
a plurality of the battery modules, wherein
the plurality of battery modules are disposed in parallel to each other in a second direction along the bottom surface and crossing the first direction; and
the battery modules adjacent in the second direction are electrically conducted and connected by a fourth connection bus bar at the one end.
